Europäisches Patentamt

European Patent Office

Office européen des brevets

(19)

(11) Numéro de publication: **0 188 135**
**B1**

(12) **FASCICULE DE BREVET EUROPÉEN**

(45) Date de publication du fascicule du brevet:
21.06.89

(51) Int. Cl.⁴: **C 08 G 18/12**, C 08 G 18/50

(21) Numéro de dépôt: **85400076.7**

(22) Date de dépôt: **17.01.85**

(54) **Prépolymères stables de polyisocyanates à fonctions hydroxyles, leur procédé de fabrication et leur application à la fabrication de polyuréthannes.**

(43) Date de publication de la demande:
**23.07.86 Bulletin 86/30**

(45) Mention de la délivrance du brevet:
**21.06.89 Bulletin 89/25**

(84) Etats contractants désignés:
**AT BE CH DE FR GB IT LI LU NL SE**

(56) Documents cité:
**CH-A-417 100**
**DE-A-2 409 441**
**DE-A-2 555 535**
**FR-A-1 331 217**
**FR-A-2 331 578**
**FR-A-2 476 101**
**FR-A-2 547 824**
**FR-A-2 549 481**

(73) Titulaire: **NORSOLOR S.A., Tour Aurore Place des Reflets, F-92080 Paris la Defense Cédex 5 (FR)**

(72) Inventeur: **Laumain, François- Bernard, 123 rue Anatole France, F-92300 Levallois- Perret (FR)**

(74) Mandataire: **Dubost, Thierry, c/o NORSOLOR Service Propriété Industrielle B.P. 57, F-62670 Mazingarbe (FR)**

**Description**

La présente invention concerne des prépolymères stables de polyisocyanates à fonctions hydroxyles, leur procédé de fabrication et leur application à la fabrication de polyuréthannes, en particulier de mousses de dureté élevée.

On connaît déjà par le brevet américain n° 3 468 819 la réaction d'un polyisocyanate organique avec un mélange de polyols comprenant un polyol dépourvu d'azote tertiaire et de 5 à 40 % en poids d'un polyol contenant un azote tertiaire, ayant de 2 à 8 groupes hydroxyles et ayant un poids moléculaire de 175 à 1000. L'homme de métier a cependant observé que les produits ainsi définis présentent d'une part une stabilité très insuffisante et d'autre part des viscosités très élevées qui en compliquent l'emploi dans la fabrication de polyuréthannes.

Pour pallier cet inconvénient, on à proposé dans le brevet français 2 331 578 le procédé de fabrication de dispersions stables de faible viscosité par polyaddition de polyisocyanates et de mélanges de composés hydroxylés avec une quantité d'eau importante. Ce procédé rend nécessaire, avec tous les inconvénients qu'elle représente, la purification de la dispersion pour éliminer toute trace d'eau.

La fabrication d'un polyol modifié par réaction d'un aminoalcool avec un polyisocyanate en présence d'un polyol est décrite dans le brevet français 2 476 101, mais selon le procédé décrit il se forme des grumeaux lorsqu'on emploie un polyol sans OH primaire.

C'est pourquoi un objet de la présente invention réside dans la mise au point de prépolymères de polyisocyanates à fonctions hydroxyles, obtenus selon une technique simple, qui ne décantent pas et qui possèdent des viscosités acceptables pouvant encore être abaissées, du fait de la stabilité du produit, par dilution dans un tiers polyol.

Les prépolymères selon l'invention sont constitués de produits de polyaddition d'au moins un polyisocyanate organique avec au moins un produit de condensation (A) dont le poids moléculaire est d'au moins 290 et obtenu à partir d'oxyde d'alkylène sur une amine, en présence d'au moins un polyol (B) contenant des fonctions hydroxyles libres et dépourvu d'axote tertiarie, caractérisés en ce que ledit polyol (B) ne contient pas de fonctions hydroxyles primaires et a un poids moléculaire supérieur ou égal à 1300, en ce que ledit polyol (B) est:

1. soit un polyéther ou polythioéther ayant un poids moléculaire compris entre 1 300 et 10 000 obtenu par réaction d'au moins un oxyde d'alkylène avec au moins un alcool polyfonctionnel ou un thiodiglycol. Un tel polyéther ou polythioéther possède de préférence une viscosité inférieure ou égale à 5 Pa.s et possède de préférence de 2 à 6 fonctions hydroxyles par molécule. Lorsqu'un mélange d'oxyde d'alkylène est utilisé pour sa préparation, ledit mélange comporte de préférence au plus 30 % en poids d'oxyde d'éthylène.

2. soit un polyester de haut poids moléculaire obtenu par réaction d'un acide polycarboxylique avec un alcool polyfonctionnel, ou bien encore est un polyol greffé obtenu par réaction d'anhydride maléique puis d'acrylonitrile et/ou de styrène, et en ce que lesdits prépolymères sont définis par les quatre rapports suivants:

a) $\dfrac{nN}{a\alpha + b\beta}$  compris entre 0,01 et 0,60

b) $\dfrac{n}{n + a + b}$  compris entre 0,025 et 0,5

c) $\dfrac{b}{n + a + b}$  compris entre 0,20 et 0,95 et de préférence entre 0,2 et 0,8

d) $\dfrac{a}{n + a + b}$  compris entre 0,025 et 0,70 et de préférence entre 0,1 et 0,6

sachant que:

"n"  est le nombre de molécules de polyisocyanate
N  le nombre de fonctions -NCO par molécule
"a"  le nombre de molécules de produit de condensation (A)
"b"  le nombre de molécules de polyol (B)
α  le nombre de fonctions à hydrogène mobile par molécule de produit de condensation (A)
β  le nombre de fonctions à hydrogène mobile par molécule de polyol (B).

Dans toute la description de la présente invention, il convient d'entendre:

- par oxyde d'alkylène un produit tel que, par exemple, l'oxyde d'éthylène, l'oxyde de 1,2-propylène, l'oxyde de 1,2-butylène, l'oxyde de 2,3-butylène, l'épichlorhydrine, l'oxyde de styrène, le tétrahydrofuranne ainsi que leurs dérivés.
- par alcool polyfonctionnel un produit tel que, par exemple, l'éthylène glycol, le 1,2-propylène glycol, le 1,3-butylèneglycol, le 1,4-butylèneglycol le 1,5-pentanediol, le 1,4-pentanediol, le 1,3-pentanediol, le 1,6-hexanediol, le 1,7-heptanediol, la glycérine, le triméthylolpropane, le 1,3,6-hexanetriol, le pentaérythritol, le sorbitol, l'α-méthyl-d-glucose et leurs dérivés.

2

- par acide polycarboxylique un produit tel que, par exemple, l'acide oxalique, l'acide malonique, l'acide succinique, l'acide glutarique, l'acide adipique, l'acide pimélique, l'acide subérique, l'acide azélaïque, l'acide sébacique, l'acide brassylique, l'acide thapsique, l'acide maléique, l'acide fumarique, l'acide glutaconique, l'acide α-hydromuconique, l'acide β-hydromuconique, l'acide α-butyl α-éthylglutarique, l'acide α-β-diéthylsuccinique, l'acide isophtalique, l'acide téréphtalique, l'acide hémimellitique, l'acide trimellitique, l'acide trimésique, l'acide mellophanique, l'acide préhnitique, l'acide pyromellitique, l'acide benzènepentacarboxylique, l'acide 1,4-cyclohexanedicarboxylique, l'acide 3,4,9,10-pérylène tétracarboxylique, ou encore les anhydrides ou esters d'alcools inférieurs de tels acides.

- par amine un produit choisi notamment parmi la méthylamine, l'éthylamine, la propylamine, la méthyléthanolamine, la méthyldiéthanolamine, la méthyl propanolamine, la méthyldipropanolamine, l'éthyléthanolamine, l'éthyl propanolamine, la diéthanolamine, la triéthanolamine, la méthylisopropanolamine, la tri-isopropanolamine, la diisopropanolamine, la diméthylaminopropylamine, l'éthylènediamine, l'hydrazine, la toluène diamine, la tétraméthylènediamine, l'hexaméthylènediamine, la N,N'-diméthylhydrazine, la 1,3-propylenediamine, le 4,4'-diamino diphényl méthane, la p-phénylènediamine, la 1,4-butane diamine, la diéthylènetriamine et la triéthylènetétramine.

- par polyisocyanate organique tout polyisocyanate dont le radical organique peut être aliphatique, aromatique, acyclique, alicyclique ou hétérocyclique tel que, par exemple, l'éthylène diisocyanate, l'éthylidène diisocyanate, le propylène-1,2-diisocyanate, le cyclohexylène-1,2-diisocyanate, le 2,6-toluylène-diisocyanate, le 4,4'-diphénylméthane diisocyanate, le 3,3'diméthoxy-4,4'-biphénylène-diisocyanate, le p,p',p''-triphénylméthane diisocyanate, le 1,5-naphtalène-diisocyanate, le furfurylidène-diisocyanate, les polyphényl-polyméthylène-polyisocyanates et les polyisocyanates possédant des groupes carbodiimides, uréthannes, allophanates, isocyanates ou ureido.

Un procédé de fabrication des prépolymères selon l'invention consiste à faire réagir à une température comprise entre 10° et 150°C, et plus habituellement entre 20° et 60°C, le mélange d'au moins un polyisocyanate organique, d'au moins un produit de condensation (A) et d'au moins un polyol (B). Le cas échéant la réaction peut être effectuée en présence d'un catalyseur comme la triéthylènediamine ou de sels métalliques.

Avec les prépolymères de l'invention, on peut préparer des mousses ou des élastomères de polyuréthanne en utilisant les formules et les modes opératoires bien connus de l'homme de l'art et semblables à ceux qui sont décrits par exemple dans les ouvrages suivants:

- Flexible Polyuréthane foams de G. WOODS - 1982 - Ed. Appl. Sciences Publishers.
- Kunstoff Handbuch de VIEWEG-HÖCHTLEN - Vol. 7.
- Advances in Urethane Science and Technology de FRISCH et REEGEN - Vol. 1 à 8.

Les exemples suivants, non limitatifs, illustrent l'invention. La définition des composés A et B des exemples est donnée dans le tableau en annexe. Le polyisocyanate utilisé est un mélange des isomères de toluène diisocyanate 2 - 4 et 2 - 6 dans le rapport 80 - 20 (TDI) ou du 4,4' diphenylméthane diisocyanate (MDI) pratiquement pur.

Le mélange des composés se fait au moyen d'un agitateur de forme typhon et de diamètre 55 mm à une vitesse de $1.10^{+2}$ tours/minute, dans des boîtes de 2 à 5 litres. La viscosité du produit obtenu est mesurée au viscosimètre BROOKFIELD type LV. Le numéro de l'aiguille employée est indiqué dans chaque exemple.

**Exemple 1**

Dans un récipient métallique de 3 litres, à température ambiante, on introduit 1000 g de composé 1B puis 141,4 g de composé 1A. On agite 3 minutes puis on verse en 30 secondes 35,2 g de TDI. On agite 10 minutes puis on verse 0,1 g d'octoate stanneux (Kosmos 29) et on agite 10 minutes. On note alors une température de 35°C.

On obtient un produit transparent dont la viscosité est 2850 mPa.s à 25°C (Aiguille 3).

**Exemple 2** (comparatif)

Dans les conditions de l'exemple 1, à 1000 g de composé 1B on ajoute 60,2 g de triéthanolamine puis 35,2 g de TDI, puis 0,1 g d'octoate stanneux. Après agitation, on note une température de 38°C. On obtient un produit blanc présentant de petits grumeaux en suspension.

# EP 0 188 135 B1

**Exemple 3**

Dans un récipient métallique de 3 litres, à température ambiante, on introduit 400 g de composé 2B puis 282 g de composé 2A. On agite le tout pour bien mélanger les deux produits.

Dans un deuxième récipient, on introduit 400 g de composé 2B puis 34,8 g de TDI, à température ambiante. On agite 1 minute puis on ajoute en 1 minute et sous agitation le tout dans le mélange du premier récipient. On agite 10 minutes. On observe une température de 32°C. On obtient un produit transparent. On ajoute alors 1 g d'octoate stanneux. On obtient un produit opalescent dont la viscosité à 25°C est 1815 mPa.s (Aiguille 2).

**Exemple 4** (comparatif)

Dans les conditions de l'exemple 3, on mélange 800 g de composé 2B, 86 g d éthylène diamine et 34,8 g de TDI Après agitation, on observe une température de 45°C Le produit obtenu, blanc, présente des grumeaux.

**Exemple 5**

Dans un récipient métallique de 3 litres, à température ambiante, on introduit 1200 g de composé 38 puis 150 g de composé 3A. On agite 3 minutes puis on chauffe le mélange à 52°C. On ajoute alors sous agitation 69,6 g de TDI et on agite 10 minutes. On note une température de 55°C. On ajoute enfin 1 g d'octoate stanneux et on agite 2 minutes. On obtient un produit jaune opaque. Sa viscosité à 25°C est 4800 mPa.s (Aiguille 3).

**Exemple 6**

Dans un récipient métallique de 3 litres. on introduit à température ambiante 954 g de composé 4B puis 2,9 g de composé 4A. On agite 3 minutes puis on ajoute en 30 secondes 3,8 g de MDI (de marque commerciale ®Isonate L 143). On agite 10 minutes. On ne note pas d'augmentation sensible de la température. Le produit obtenu est opalescent. Sa viscosité à 25°C est 662 mPa.s (Aiguille 2).

**Exemple 7**

Dans un récipient métallique de 3 litres, on introduit à température ambiante 1060 g de composé 4B puis 7,3 g de composé 4A. Après mélange, on ajoute 6,25 g de MDI. On agite 2 minutes puis on ajoute 1 g d'octoate stanneux et on agite à nouveau 10 minutes. On obtient un produit blanc dont la viscosité à 25°C est 795 mPa.s (Aiguille 2).

**Exemple 8**

Dans une bouteille en plastique de 1,5 litre, on mélange, à température ambiante:

| | |
|---|---|
| 196 g | de composé 2B |
| 14 g | du produit de l'exemple 1 |
| 9,6 g | d'eau |
| 0,58 g | de diméthyléthanolamine (DMEA) |
| 2,8 g | d'huile de silicone de dénommination commerciale ®Tegostab BF 2370 |

On ajoute ensuite 0,3 g d'octoate stanneux puis 116,6 g de TDI. On mélange le tout violemment 10 secondes et on verse le liquide dans un cube en papier de 20 cm d'arête. On note un temps d'expansion - laps de temps séparant le moment où l'on ajoute le TDI et celui où l'expansion se termine -, de 135 secondes. On obtient une mousse poreuse de densité 22 kg/m$^3$ et dont la dureté élevée, mesurée selon la norme NFT 56 110 a pour valeurs:

| CLD (Compression Load Deflection) à | 25 % 2,6 KPa |
|---|---|
| | 50 % 3,9 KPa |
| | 65 % 6,4 KPa |

4

**Exemples 9 à 11**

On procède comme dans l'exemple 8. Le poids en grammes des produits utilisés ainsi que les caractéristiques des mousses obtenues sont donnés dans le tableau ci-après.

| Exemples | 9 | 10 | 11 |
|---|---|---|---|
| Composé 2B ... | 180 | | |
| Produit de l'exemple 3 ... | 20 | | |
| Produit de l'exemple 6 ... | | 200 | |
| Produit de l'exemple 7 ... | | | 200 |
| Eau ... | 9,6 | 9,6 | 9,6 |
| DMEA ... | 0,58 | 0,58 | 0,58 |
| Huile de silicone ... | 2,8 | 2,8 | 2,8 |
| Octoate stanneux ... | 0,3 | 0,3 | 0,3 |
| TDI ... | 115 | 113,5 | 113,3 |
| Temps d'expansion (en secondes) ... | 102 | 94 | 94 |
| Densité (Kg/m$^3$) ... | 22 | 22 | 23 |
| CLD (en KPa) à 25 % ... | 2,5 | 2,7 | 2,8 |
| 50 % ... | 3,4 | 3,6 | 3,8 |
| 65 % ... | 5,4 | 5,8 | 6,5 |

Les exemples 10 et 11 permettent de voir l'influence de l'augmentation des rapports $\frac{a}{a+b+n}$ et $\frac{b}{a+b+n}$ sur la portance de la mousse.

**Exemples 12 à 15**

Ces exemples démontrent l'accroissement de portance. On procède comme dans l'exemple 8. Les poids des produits utilisés sont donnés dans le tableau ci-après.

Les exemples 12, 13 et 14 sont donnés à titre comparatif.

| Exemples | 12 | 13 | 14 | 15 |
|---|---|---|---|---|
| Composé 2B ... | 200 | | 100 | 100 |
| Composé 3B ... | | 200 | 100 | |
| Produit de l'exemple 5 ... | | | | 100 |
| Eau ... | 9,6 | 9,6 | 9,6 | 9,6 |
| DMEA ... | 0,58 | 0,58 | 0,58 | 0,58 |
| Huile de silicone* ... | 2,8 | 2,8 | 2,8 | 2,6 |
| Octoate stanneux* ... | 0,3 | 0,40 | 0,40 | 0,30 |
| TDI** ... | 112 | 119 | 115,7 | 114 |
| Temps d'expansion (en secondes) ... | 145 | 120 | 110 | 125 |
| Densité (Kg/m$^3$) ... | 22 | 23 | 23 | 22 |
| CLD (en KPa) à 25 % ... | 2,2 | 2,1 | 2,1 | 2,6 |
| 50 % ... | 3,0 | 3,0 | 2,9 | 3,5 |
| 65 % ... | 4,7 | 4,6 | 4,5 | 6,5 |

* la quantité est ajustée pour permettre d'avoir une mousse sans retrait
** la quantité est ajustée pour avoir toujours le même rapport

$$\frac{\text{somme fonctions NCO}}{\text{somme fonctions OH}} = 1,06$$

**Annexe**

| | Composé A | | | | Composé B | | | |
|---|---|---|---|---|---|---|---|---|
| | 1 | 2 | 3 | 4 | 1 | 2 | 3 | 4 |
| Composé d'amorçage | TEOA | EDA | OTD | EDA | SOR | GLY | TMP | PE |
| % Poids d'oxyde de propylène ... | 100 | 100 | 56 | 100 | 100 | 78 | 100 | 86 |
| % Poids d'oxyde d'éthylène ... | 0 | 0 | 44 | 0 | 0 | 22 | 0 | 14 |
| Poids moléculaire ... | 350 | 470 | 750 | 290 | 1350 | 4000 | 3000 | 5300 |
| % en nombre de groupements -OH primaires ... | 0 | 0 | >10 | 0 | 0 | 0 | 0 | 0 |

TEOA : Triéthanolamine
EDA : Ethylènediamine
OTD : Orthotoluénediamine brut
SOR : Sorbitol
GLY : Glycérine
TMP : Trimethylolpropane
PE : Pentaérythritol

## Revendications

1. Prépolymères stables de polyisocyanates à fonctions hydroxyles constitués de produits de polyaddition d'au moins un polyisocyanate organique avec au moins un produit de condensation (A). dont le poids moléculaire est d'au moins 290 et obtenu à parti d'oxyde d'alkylène sur une amine, en présence d'au moins un polyol (B) contenant des fonctions hydroxyles libres et dépourvu d'azote tertiaire, caractérisés en ce que ledit polyol (B) ne contient pas de fonctions hydroxyles primaires et à un poids moléculaire supérieur ou égal à 1300, en ce que ledit polyol (B) est:

- soit un polyéther ou un polythioéther ayant un poids moléculaire compris entre 1 300 et 10 000 obtenu par réaction d'au moins un oxyde d'alkylène avec au moins un alcool polyfonctionnel ou un thiodiglycol,
- soit un polyol greffé par réaction d'anhydride maléique puis d'acrylonitrile et/ou de styrène,
- ou un polyester de haut poids moléculaire, obtenu par réaction d'un acide polycarboxylique avec un alcool polyfonctionnel,

et en ce que lesdits prépolymères sont définis par les rapports suivants:

a) $\frac{nN}{a\alpha + b\beta}$  compris entre 0,01 et 0,60

b) $\frac{n}{n + a + b}$  compris entre 0,025 et 0,5

c) $\frac{b}{n + a + b}$  compris entre 0,20 et 0,95 et de préférence entre 0,2 et 0,8

d) $\frac{a}{n + a + b}$  compris entre 0,025 et 0,70 et de préférence entre 0,1 et 0,6

sachant que:

"n" est le nombre de molécules de polyisocyanate
N le nombre de fonctions -NCO par molécule
"a" le nombre de molécules de produit de condensation (A)
"b" le nombre de molécules de polyol (B)
$\alpha$ le nombre de fonctions à hydrogène mobile par molécule de produit de condensation (A
$\beta$ le nombre de fonctions à hydrogène mobile par molécule de polyol (B).

2. Prépolymères selon la revendication 1, caractérisés en ce que ledit polyéther ou polythioéther est obtenu à

6

partir d'un mélange d'oxydes d'alkylène, ledit mélange comportant au plus 30 % en poids d'oxyde d'éthylène.

3. Prépolymères selon l'une des revendications 1 et 2, caractérisés en ce que ledit polythioéther ou polyéther possède de 2 à 6 fonctions hydroxyles par molécule.

4. Procédé de fabrication de prépolymères selon l'une des revendications 1 à 3, caractérisé en ce qu'il consiste à faire réagir à une température comprise entre 10 et 150°C le mélange d'au moins un polyisocyanate organique, d'au moins un produit de condensation (A) et d'au moins un polyol (B) dans les rapports définis dans la revendication 1.

## Claims

1. Stable polyisocyanate prepolymers containing hydroxyl functional groups, consisting of products of polyaddition of at least one organic polyisocyanate with at least one condensation product (A) whose molecular weight is at least 290 and obtained from alkylene oxide to an amine, in the presence of at least one polyol (B) containing free hydroxyl groups and devoid of tertiary nitrogen, which are characterized in that the said polyol (B) does not contain any primary hydroxyl functional groups and has a molecular weight higher than or equal to 1300, in that the said polyol (B) is:

- either a polyether or a polythioether having a molecular weight of between 1 300 and 10 000, obtained by reaction of at least one alkylene oxide with at least one polyfunctional alcohol or a thiodiglycol,
- or a polyol grafted by reaction of maleic anhydride followed by acrylonitrile and/or styrene,
- or a polyester of high molecular weight, obtained by reaction of a polycarboxylic acid with a polyfunctional alcohol,

and in that the said prepolymers are defined by the following relationships:

a)  $nN/(a\alpha + b\beta)$  between 0.01 and 0.60
b)  $n/(n + a + b)$  between 0.025 and 0.5
c)  $b/(n + a + b)$  between 0.20 and 0.95 and preferably between 0.2 and 0.8
d)  $a/(n + a + b)$  between 0.025 and 0.70 and preferably between 0.1 and 0.6

it being known that:

"n"  is the number of molecules of polyisocyanate
N  the number of -NCO functional groups per molecule
"a"  the number of molecules of condensation product (A)
"b"  the number of molecules of polyol (B)
$\alpha$  the number of functional groups containing mobile hydrogen per molecule of condensation product (A)
$\beta$  the number of functional groups containing mobile hydrogen per molecule of polyol (B).

2. Prepolymers according to Claim 1, characterized in that the said polyether or polythioether is obtained from a mixture of alkylene oxides, the said mixture containing not more than 30 % by weight of ethylene oxide.

3. Prepolymers according to either of Claims 1 and 2, characterized in that the said polythioether or polyether contains from 2 to 6 hydroxyl functional groups per molecule.

4. Process for the manufacture of prepolymers according to one of Claims 1 to 3, characterized in that it consists in reacting at a temperature of between 10 and 150°C the mixture of at least one organic polyisocyanate, of at least one condensation product (A) and of at least one polyol (B) in the ratios defined in Claim 1.

## Patentansprüche

1. Stabile, Hydroxylgruppen enthaltende Prepolymere aus Polyisocyanaten, gebildet aus produkten der Polyaddition mindestens eines organischen Polyisocyanats und mindestens eines Kondensationsprodukts (A), dessen Molekulargewicht mindestens 290 beträgt und das erhalten wurde aus Alkylenoxid und einem Amin, in Gegenwart mindestens eines Polyols (B), das freie Hydroxylgruppen enthält und frei von tertiärem Stickstoff ist, dadurch gekennzeichnet, daß das genannte Polyol (B) keine primären Hydroxylgruppen enthält und ein Molekulargewicht über oder gleich 1 300 besitzt, daß das genannte Polyol (B) ist:

- entweder ein Polyäther oder ein Polythioäther mit einem Molekulargewicht zwischen 1 300 und 10 000 ist, erhalten durch Reaktion mindestens eines Alkylenoxids mit mindestens einem polyfunktionellen Alkohol oder einem Thiodiglykol,
- oder ein durch Reaktion von Maleinsäureanhydrid und dann von Acrylnitril und/oder Styrol gepfropftes Polyol,
- oder ein Polyester mit hohem Molekulargewicht, erhalten durch Reaktion einer Polykarbonsäure mit einem polyfunktionellen Alkohol, und daß die genannten Prepolymere durch folgende Verhältnisse bestimmt sind:

a) $\dfrac{nN}{a\alpha + b\beta}$ : zwischen 0,01 und 0,60

b) $\dfrac{n}{n + a + b}$ : zwischen 0,025 und 0,5

c) $\dfrac{b}{n + a + b}$ : zwischen 0,20 und 0,95 und vorzugsweise zwischen 0,2 und 0,8

d) $\dfrac{a}{n + a + b}$ : zwischen 0,025 und 0,70 und vorzugsweise zwischen 0,1 und 0,6

worin:

"n" die Zahl der Polyisocyanatmoleküle,
N die Zahl der NCO-Gruppen pro Molekül,
"a" die Zahl der Moleküle des Kondensationsprodukts (A),
"b" die Zahl der Moleküle des Polyols (B),
α die Zahl der Gruppen mit "mobilem" Wasserstoff pro Molekül des Kondensationsprodukts (A) und
β die Zahl der Gruppen mit "mobilem" Wasserstoff pro Molekül des Polyols (B) ist.

2. Prepolymere nach Anspruch 1, dadurch gekennzeichnet, daß der genannte Polyäther oder Polythioäther erhalten wurde aus einer höchstens 30 Gew.-% enthaltenden Mischung aus Alkylenoxiden.

3. Prepolymere nach Anspruch 1 oder 2, dadurch gekennzeichnet, daß der genannte Polyäther oder Polythioäther 2 bis 6 Hydroxylgruppen pro Molekül besitzt.

4. Verfahren zur Herstellung von Prepolymeren nach einem der Ansprüche 1 bis 3, dadurch gekennzeichnet, daß es darin besteht, die Mischung aus mindestens einem organischen Polyisocyanat, mindestens einem Kondensationsprodukt (A) und mindestens einem Polyol (B) in den in Anspruch 1 angegebenen Verhältnissen bei einer Temperatur zwischen 10 und 150° C ausreagieren zu lassen.